Europäisches Patentamt

European Patent Office

Office européen des brevets

(19)

(11) Numéro de publication: **0 012 651**
**B1**

(12) **FASCICULE DE BREVET EUROPEEN**

(45) Date de publication du fascicule du brevet:
**20.07.83**

(51) Int. Cl.³: **G 02 F 1/13,** H 04 N 3/12

(21) Numéro de dépôt: **79400922.5**

(22) Date de dépôt: **27.11.79**

(54) **Dispositif d'affichage à cristal liquide.**

(30) Priorité: **15.12.78 FR 7835382**

(43) Date de publication de la demande:
**25.06.80 Bulletin 80/13**

(45) Mention de la délivrance du brevet:
**20.07.83 Bulletin 83/29**

(84) Etats contractants désignés:
**DE GB IT NL SE**

(56) Documents cités:
**DE-A-2 235 881**
**FR-A-1 484 585**
**FR-A-2 191 805**
**FR-A-2 275 087**

**JOURNAL OF APPLIED PHYSICS, vol. 45, no. 10, october 1974, New York, US, G.N. TAYLOR: «Materials aspects of thermally adressed smectic and cholesteric liquid crystal storage displays», pages 4330–4338**

(73) Titulaire: **THOMSON-CSF, 173, Boulevard Haussmann, F-75379 Paris Cedex 08 (FR)**

(72) Inventeur: **Hareng, Michel, "THOMSON-CSF" - SCPI 173, bld Haussmann, F-75360 Paris Cedex 08 (FR)**
Inventeur: **Le Berre, Serge, "THOMSON-CSF" - SCPI 173, bld Haussmann, F-75360 Paris Cedex 08 (FR)**
Inventeur: **Leclerc, Pierre, "THOMSON-CSF" - SCPI 173, bld Haussmann, F-75360 Paris Cedex 08 (FR)**

(74) Mandataire: **Desperrier, Jean-Louis et al, THOMSON-CSF SCPI 173, Bld Haussmann, F-75379 Paris Cedex 08 (FR)**

Dispositif d'affichage a cristal liquide

La présente invention se rapporte aux dispositifs d'affichage à cristal liquide qui permettent de visualiser des dessins dont le contenu est représenté par un signal électrique tel que par exemple un signal vidéo.

Dans le document FR-A-2 275 087, on a décrit un dispositif de visualisation utilisant un effet thermoélectrique dans une couche de cristal liquide, l'inscription de l'image se faisant par un balayage de la couche avec un faisceau infra-rouge produit par un laser et défléchi par des déviateurs électro-optiques.

La puissance de chauffage qui doit être fournie par le faisceau infra-rouge est telle qu'il faut utiliser un laser de forte puissance, par exemple un laser solide du type dit YAG qui est coûteux et nécessite un refroidissement énergique généralement obtenu avec de l'eau, d'où un grand nombre de contraintes.

Par ailleurs l'émission infra-rouge est de grande longueur d'onde ($\lambda = 1,06 \mu$), ce qui nécessite des composants optiques spéciaux et notamment un déflecteur acousto-optique – au molybdate de plomb par exemple – qui tout en étant coûteux offre une résolution faible (400 points au maximum).

Il est connu du document FR 1 484 585 un système de représentation visuelle d'information mettant en œuvre une couche de cristal liquide cholestérique en contact intime avec une couche photoconductrice polarisée électriquement. Des changements de propriétés de réflexion de la lumière sont induits dans le cristal liquide en réponse à l'échauffement de la couche photoconductrice résultant de la focalisation sur celle-ci d'une image lumineuse. Il est également connu du document DE-A-2 235 881 de réaliser un dispositif amplificateur de lumière ou convertisseur d'image à partir d'une couche de cristal liquide cholestérique associée à une couche de substance semi-conductrice polarisée électriquement. La couche semi-conductrice convertit une image optique incidente en image thermique et la couche de cristal liquide rend cette image thermique perceptible par réflexion sélective d'une lumière ambiante.

Le but de l'invention est de diminuer fortement la puissance nécessaire pour le laser d'inscription utilisé dans un appareil du type décrit dans le document FR-A-2 275 087. On peut alors utiliser un laser de faible puissance – du type hélium-néon par exemple – dont le prix est faible et qui émet dans le visible. Ce laser ne nécessite pas de refroidissement et on peut utiliser des composants optiques classiques ainsi qu'un déflecteur de type acousto-optique ayant une grande résolution (plus de 1000 points).

Pour cela, l'invention propose de limiter la fonction du laser à l'adressage des points à inscrire, et de provoquer le dégagement de chaleur aux points ainsi adressés à l'aide d'une source d'énergie située dans la cellule même de visualisation et dont le fonctionnement est déclenché par le faisceau lumineux issu du laser.

L'invention a pour objet un dispositif d'affichage selon la revendication 1.

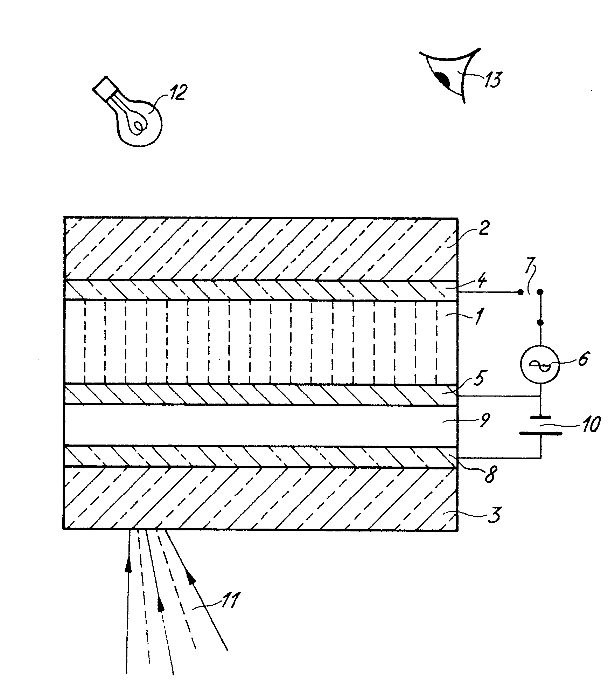

D'autres particularités et avantages de l'invention apparaîtront clairement dans la description suivante présentée à titre d'exemple non limitatif et faite en regard de la figure unique annexée qui représente une coupe schématique d'une cellule de visualisation.

Cette cellule comprend une couche de cristal liquide 1, par exemple du Cyano-octyl-biphényl connu sous le nom de COB, maintenu par des moyens thermostatiques non représentés dans l'état smectique, soit par exemple pour le COB à une température de 27 °C située entre la transition cristal-smectique (21,5 °C) et la transistion smectique-nématique (32 °C). Cette couche est située entre deux lames transparentes 2 et 3 – en verre par exemple – qui délimitent la cellule. Une première électrode transparente 4 – en oxyde mixte d'indium et d'étain par exemple – est déposée entre le cristal liquide et le substrat 2.

L'autre face de la couche de cristal liquide repose sur une couche métallique réfléchissante 5 qui permet avec l'électrode 4 d'appliquer au cristal liquide un champ électrique obtenu à l'aide d'un générateur de tension de préférence alternative 6 et d'un commutateur 7. D'une manière connue dans l'art, on peut ainsi procéder à un effacement sélectif sous une tension de 30 V pour une épaisseur de 15 µm de COB, ou à un effacement total sous une tension de 70 V. Cette couche métallique doit être assez mince pour laisser passer rapidement la chaleur d'inscription. On obtient de bons résultats avec par exemple une couche d'aluminium d'épaisseur comprise entre 1000 et 2000 Å.

La lame 3 supporte du côté du cristal liquide une deuxième électrode transparente 8.

Une couche 9 d'un photoconducteur – du séléniure de cadmium de résistivité 0,2 MΩ m dans l'obscurité par exemple – est insérée entre la couche métallique 5 et l'électrode 8. Cette couche doit être assez épaisse pour développer l'effet de chauffage désiré, et assez mince pour ne pas étaler en largeur le point d'inscription. Dans une réalisation pratique où la cellule est un carré de 2 cm de côté et le point d'inscription a un diamètre de 15 µm, la couche de CdSe, obtenue par évaporation, est épaisse de 1 µm.

Cette couche photoconductrice est alimentée par une source de tension continue 10 connectée entre la couche métallique 5 et l'électrode 8.

Pour inscrire les dessins désirés, on projette sur la couche photoconductrice un faisceau lumineux 11 généré, défléchi et focalisé par des moyens non représentés et connus dans l'art. Ce faisceau lumineux est, selon l'invention, de faible énergie; il est avantageusement obtenu à partir d'un laser HeNe de longueur d'onde 6328 Å. La puissance nominale d'un tel laser est typiquement de l'ordre du milliwatt et l'éclairement obtenu sur un point de 15 µm de diamètre permet une chute de résistivité de la couche de CdSe en ce point d'un facteur $10^6$ en moins de 50 µs.

Dans ces conditions le courant fourni par la source 10 se concentre au point éclairé où se dissipe la quasi-totalité de l'énergie dissipée. Par conduction la chaleur, ainsi dissipée provoque le passage en phase isotrope du cristal liquide en un point situé juste au-dessus du point éclairé. Lorsque l'on supprime l'éclairement du photoconducteur, le cristal se refroidit et devient fortement diffusant. Par réflexion sur la cellule de la lumière fournie par une source lumineuse 12, l'observateur 13 voit ainsi par contraste un point noir à l'emplacement où le cristal est diffusant.

Pour inscrire un tel point dans l'exemple de réalisation décrit, il faut une puissance dissipée en ce point dans la couche 9 d'environ 20 mW$_+$ (soit une densité de puissance d'environ 11 kw/cm²), ce qui nécessite pour la source 10 une tension de 4,5 V. La rigidité di-électrique de la couche 9 est largement suffisante pour supporter cette tension sous l'épaisseur décrite de 1 µm.

En l'absence d'éclairement, le courant débité dans l'ensemble de la couche 9 dissipe environ 0,02 W/cm², ce qui procure un léger échauffement global de toute la cellule, qui contribue à maintenir le cristal liquide dans l'état smectique.

Pour effacer les inscriptions, on applique avec l'interrupteur 7 la tension fournie par la source 6 soit sans faire intervenir le faisceau 11 en utilisant une forte tension pour effacer toute la surface, soit en repassant le faisceau 11 aux endroits que l'on désire effacer sélectivement et en utilisant une tension plus faible.

En combinant les effets du faisceau 11 et de la source 6, on peut obtenir divers modes d'inscription et si l'on applique une tension vidéo par l'intermédiaire de cette source on obtient une image comprenant des demi-teintes.

La visualisation de cette image n'est pas limitée à l'observation directe décrite ci-dessus et on peut avantageusement procéder à une projection sur grand écran avec une optique de Schlieren. Le double trajet optique dû à l'observation par réflexion sur la couche 5 provoque d'ailleurs une augmentation du contraste par rapport aux dispositifs antérieurs observés par transmission.

On peut aussi, en prenant pour l'électrode 5 séparant le cristal liquide du matériau photoconducteur un matériau transparent, projeter par transmission. Dans ce cas on utilisera un laser émettant un rayon invisible à l'œil, infra-rouge par exemple.

## Revendications

1. Dispositif d'affichage du type comprenant, insérée entre une première lame transparente (2) et une seconde lame transparente (3), une couche (1) de cristal liquide en phase smectique dans laquelle est susceptible d'être créé par un cycle thermique transitoire d'échauffement–refroidissement un état diffusant effaçable par des moyens (6, 7) soumettant ladite couche (1) à un champ électrique produit par une tension appliquée à une première électrode transparente (4) et à une seconde électrode (5) qui enserrent ladite couche (1), ladite première électrode (4) étant portée par ladite première lame transparente (2); ledit dispositif comprenant en outre des moyens d'inscription temporaire pour engendrer ledit cycle thermique transitoire en échauffant localement et transitoirement la couche de cristal liquide (1) à une température suffisante pour porter des portions désirées de cette couche (1) dans la phase isotrope et leur permettre ensuite de revenir dans leur phase smectique en conservant l'état diffusant né au cours du refroidissement, caractérisé en ce que lesdits moyens d'inscription temporaire comprennent, inséré entre ladite seconde lame transparente (3) et ladite couche de cristal liquide (1), un empilage comprenant une première contre-électrode transparente (8) disposée contre ladite seconde lame transparente, une couche de matériau photoconducteur (9) et une seconde contre-électrode thermiquement conductrice constituée par ladite seconde électrode (5), une source de tension continue (10) raccordée à ladite première contre-électrode (8) et à ladite seconde électrode (5), et des moyens d'adressage optique pour émettre un faisceau (11) optique balayant ladite couche photoconductrice (9), les paramètres de ladite couche photoconductrice et la tension continue de ladite source étant choisis de façon à permettre la dissipation par effet Joule, dans les portions de ladite couche photoconductrice en regard desdites portions désirées de ladite couche de cristal liquide, d'une puissance de chauffage suffisante pour engendrer ledit échauffement requis.

2. Dispositif selon la revendication 1, caractérisé en ce que ladite seconde électrode (5) est une électrode opaque en métal réfléchissant.

3. Dispositif selon l'une quelconque des revendications 1 et 2, caractérisé en ce que ledit faisceau (11) est issu d'un laser hélium-néon.

4. Dispositif selon la revendication 1, caractérisé en ce que ladite seconde électrode (5) est une électrode transparente, ledit faisceau (11) étant un faisceau de rayonnement non visible.

5. Dispositif selon la revendication 1, caractérisé en ce que les paramètres de ladite couche photoconductrice et ladite tension continue de ladite source sont choisis de façon à permettre la dissipation par effet Joule d'une puissance de l'ordre de 20 mW dans des portions d'environ 15 µm de diamètre.

6. Dispositif selon la revendication 5, caractérisé en ce que ladite couche photoconductrice présente une épaisseur d'environ 1 µm et une résistivité d'environ 0,2 MΩ × m dans l'obscurité, avec une chute de résistivité de $10^6$ lorsqu'elle est illuminée, la tension de ladite source étant par ailleurs égale à 4,5 V.

## Claims

1. Display device of the type comprising, inserted between a first transparent plate (2) and a second transparent plate (3), a liquid crystal layer (1) in smectic phase in which a diffusing state may be produced by a transient heating-cooling thermal cycle, said diffusing state being erasable by means (6, 7) exposing said layer (1) to an electrical field produced by a voltage applied to a first transparent electrode (4) and a second electrode (5) between which said layer (1) is inserted, said first electrode (4) being carried by said first transparent plate (2); said device further comprising temporary inscription means for producing said transient thermal cycle by local and transient heating of the liquid crystal layer (1) to a temperature sufficient to transform desired portions of said layer (1) into the isotrope phase, and subsequently allowing the same to return to the smectic phase maintaining the diffusing state produced during cooling, characterized in that said temporary inscription means comprise, inserted between said second transparent plate (3) and said liquid crystal layer (1), a heap comprising a first transparent counter-electrode (8) applied against said second transparent plate, a photoconductive material layer (9) and a second, thermally conductive counter-electrode formed by said second electrode (5), a direct voltage source (10) being connected to said first counter-electrode (8) and said second electrode (5), and optical addressing means emitting a beam (11) optically scanning said photoconductive layer (9), the parameters of said photoconductive layer and the direct voltage of said source being selected in a manner to permit the dissipation of a sufficient heating power by Joule's effect to introduce said required heating within portions of said photoconductive layer facing said desired portions of said liquid crystal layer.

2. Device in accordance with claim 1, characterized in that said second electrode (5) is an opaque electrode of reflecting metal.

3. Device in accordance with any of claims 1 and 2, characterized in that said beam (11) is generated by a helium-neon laser.

4. Device in accordance with claim 1, characterized in that said second electrode (5) is a transparent electrode, said beam (11) being an invisible radiation beam.

5. Device in accordance with claim 1, characterized in that parameters of said photoconductive layer and said direct voltage of said source are selected in a manner to permit the dissipation by Joule's effect of a power in the order of 20 mW within portions of about 15 µm diameter.

6. Device in accordance with claim 5, characterized in that said photoconductive layer has a thickness of about 1 µm and a resistivity of about 0,2 M$\Omega \times$ m in the dark, showing a resistivity drop of about $10^6$ when it is illuminated, the voltage of said source being about 4.5 V.

## Patentansprüche

1. Anzeigevorrichtung von der Art mit einer zwischen eine erste lichtdurchlässige Scheibe (2) und eine zweite lichtdurchlässige Scheibe (3) eingefügten Schicht (1) eines Flüssigkristalls in smektischer Phase, in welcher durch einen vorübergehenden Erwärmungs/Abkühlungs-Wärmezyklus ein streuender Zustand erzeugt werden kann, der durch Mittel (6, 7) löschbar ist, welche die genannte Schicht (1) einem elektrischen Feld aussetzen, das durch eine Spannung erzeugt wird, die an eine erste lichtdurchlässige Elektrode (4) und an eine zweite Elektrode (5) angelegt wird, zwischen denen die Schicht (1) eingefasst ist, wobei die genannte erste Elektrode (4) von der ersten lichtdurchlässigen Scheibe (2) getragen wird; wobei die Vorrichtung ferner Mittel zum zeitweiligen Einschreiben für die Erzeugung des vorübergehenden Wärmezyklus durch lokale und vorübergehende Erwärmung der Flüssigkristallschicht (1) auf eine Temperatur umfasst, die ausreicht, um gewünschte Teile der genannten Schicht (1) in die isotrope Phase zu versetzen und ihr anschliessend zu gestatten, in ihre smektische Phase zurück zu gelangen, wobei der streuende Zustand aufrechterhalten wird, der während der Abkühlung entstanden ist, dadurch gekennzeichnet, dass die genannten Mittel zum zeitweiligen Einschreiben zwischen die zweite lichtdurchlässige Scheibe (3) und die Flüssigkristallschicht (1) eingefasst einen Stapelaufbau aus einer ersten lichtdurchlässigen Gegenelektrode (8), die gegen die zweite lichtdurchlässige Scheibe angelegt ist, einer Schicht (9) aus einem Photoleitermaterial und einer zweiten Gegenelektrode umfassen, die wärmeleitend und durch die zweite Elektrode (5) gebildet ist, dass eine Gleichspannung (10) an die erste Gegenelektrode (8) und die zweite Elektrode (5) angeschlossen ist und dass optische Adressiermittel ein optisches Bündel (11) aussenden, welches über die photoleitende Schicht (9) abgelenkt wird, wobei die Parameter der genannten photoleitenden Schicht und die Gleichspannung der genannten Quelle so gewählt sind, dass in denjenigen Teilen der photoleitenden Schicht, die den gewünschten Teilen der Flüssigkristallschicht gegenüberliegen, die Abgabe einer Wärmeleistung durch Joul'schen Effekt ermöglicht wird, die ausreicht, um die erforderliche Erwärmung zu verursachen.

2. Vorrichtung nach Anspruch 1, dadurch gekennzeichnet, dass die zweite Elektrode (5) eine lichtundurchlässige Elektrode aus reflektierendem Metall ist.

3. Vorrichtung nach Anspruch 1 oder 2, dadurch gekennzeichnet, dass das Bündel (11) aus einem Helium-Neon-Laser stammt.

4. Vorrichtung nach Anspruch 1, dadurch gekennzeichnet, dass die zweite Elektrode (5) eine lichtdurchlässige Elektrode ist und das Bündel (11) ein unsichtbares Strahlungsbündel ist.

5. Vorrichtung nach Anspruch 1, dadurch gekennzeichnet, dass die Parameter der photoleitenden Schicht und die Gleichspannung der Quelle so gewählt sind, dass die Abgabe einer Leistung in der Grössenordnung von 20 mW in Teilen von ungefähr 15 µm Durchmesser durch Joul'schen Effekt ermöglicht wird.

6. Vorrichtung nach Anspruch 5, dadurch gekennzeichnet, dass die photoleitende Schicht eine Dicke von etwa 1 µm und einen spezifischen Widerstand von etwa 0,2 MΩ × m bei Dunkelheit aufweist, mit einem Absinken des spezifischen Widerstandes um $10^6$, wenn sie belichtet wird, wobei die Spannung der Quelle ferner gleich 4,5 V ist.